# EUROPEAN PATENT SPECIFICATION

(11) **EP 3 144 775 B1**
(45) Date of publication and mention of the grant of the patent: **08.07.2020**
(21) Application number: 15788737.3
(22) Date of filing: 23.03.2015
(51) Int. Cl.: G06F 3/01, G06F 3/0484, G06F 3/0481, G06F 3/0485, G06F 3/0346

(54) **INFORMATION PROCESSING SYSTEM AND INFORMATION PROCESSING METHOD**
INFORMATIONSVERARBEITUNGSSYSTEM UND INFORMATIONSVERARBEITUNGSVERFAHREN
SYSTÈME DE TRAITEMENT D'INFORMATIONS ET PROCÉDÉ DE TRAITEMENT D'INFORMATIONS

(30) Priority: 09.05.2014 JP 2014098043
(43) Date of publication of application: 22.03.2017
(73) Proprietor: Sony Corporation, Tokyo 108-0075 (JP)
(72) Inventor: KATO, Ayumi, Tokyo 108-0075 (JP); KASAHARA, Shunichi, Tokyo 108-0075 (JP); TSUKAHARA, Tsubasa, Tokyo 108-0075 (JP); KIMURA, Jun, Tokyo 108-0075 (JP); KAWANO, Shinichi, Tokyo 108-0075 (JP)
(74) Representative: MFG Patentanwälte Meyer-Wildhagen Meggle-Freund Gerhard PartG mbB
(86) International application number: PCT/JP2015/058782
(87) International publication number: WO 2015/170520

(56) References cited:
- JP-A- H11 259 226
- JP-A- 2002 525 769
- JP-A- 2008 033 891
- JP-A- 2008 033 891
- JP-A- 2011 113 256
- US-A1- 2013 135 353

## Description

### Technical Field

The present invention relates to an information processing system and an information processing method.

### Background Art

Wearable terminals used by being worn by users have recently been developed eagerly. As one type of the wearable terminals, there is a head mounted terminal that is used by being worn on the head of a user. The head mounted terminal is configured such that a display is placed in front of the eyes of the user wearing the head mounted terminal. Accordingly, wearing the head mounted terminal, the user can confirm or operate information without performing an action such as taking out a display terminal from a bag or a pocket.

Such a head mounted terminal can be operated by input to a touch sensor provided to the terminal or by audio. However, since the display is provided in front of the eyes of the user, many attempts on operations using a line of sight have also been made. For example, Patent Literature 1 discloses a technology of scrolling an icon using a line of sight of a user wearing a head mounted terminal. Further, for example, Patent Literature 2 discloses a technology of unlocking a passcode using a line of sight. Moreover, Patent Literature 3 describes a head-mounted-device (HMD) system including at least one processor and data storage with user-interface logic executable by the at least one processor to apply at least one manipulative action to a displayed content object based on received data that indicates a first direction in which the HMD is tilted and an extent to which the HMD is tilted in the first direction. Patent Literature 4 discloses a display apparatus including an acquisition means that acquires a display element which is information to be displayed to the user; a determining means that determines a display position of the acquired display element, so that a user cannot see a portion of the acquired display element; a display means that displays the display element at the determined display position; a detection means that detects a direction of change when a direction of the user's head is changed; a selection means that selects the display element to be displayed in the detected direction of change; and an execution means that executes a predetermined process related to the selected display element.

### Citation List

### Patent Literature

Patent Literature 1: US 2013/0106674A
Patent Literature 2: US 8235529B
Patent Literature 3: US 2013/135353 A1
Patent Literature 4: JP 2008/033891 A

### Summary of Invention

### Technical Problem

However, regarding an operation using a line of sight, in selecting or determining an icon displayed on a display, it is burden on the eyes to move the line of sight to near an end of the screen and select or determine the icon. For this reason, the range in which the user can perform an operation by moving his/her line of sight is limited. Further, although there are variations between individuals, pixel movement within an image with respect to the movement of the user's line of sight is small, so that it is inconvenient to select an icon out of adjacent icons with fine movement of the line of sight.

Accordingly, the present disclosure proposes an information processing system and an information processing method which are novel and improved, and which are capable of enhancing operability using a line of sight in a head mounted terminal.

### Solution to Problem

According to a first aspect the invention provides an information processing system in accordance with claim 1. According to a second aspect the invention provides an information processing method in accordance with claim 7. Further aspects of the invention are set forth in the dependent claims, the drawings and the following description of embodiments.

According to the present disclosure, there is provided an information processing system including: a line-of-sight detection unit configured to detect a line of sight of a user; a movement detection unit configured to detect movement of a device worn by a user; and a display control unit configured to move at least one object in accordance with the movement of the device, the at least one object being displayed in a display area and being selectable using a line of sight.

According to the present disclosure, there is provided an information processing method including: detecting movement of a device worn by a user; and moving at least one object in accordance with the movement of the device, the at least one object being displayed in a display area and being selectable using a line of sight.

According to the present disclosure, movement of a user wearing a device is detected by a movement detection unit, and a display position of an object is changed in accordance with the movement of the user, the object being selectable using a line of sight. In this way, the object is displayed at a position to which the user can easily move his/her line of sight, so that the object can be selected easily using the line of sight.

### Advantageous Effects of Invention

As described above, according to the present disclosure, operability using a line of sight in a head mounted terminal can be enhanced. Note that the effects described above are not necessarily limitative. With or in the place of the above effects, there may be achieved any one of the effects described in this specification or other effects that may be grasped from this specification.

### Brief Description of Drawings

[FIG. 1] FIG. 1 is an explanatory diagram showing an example of a head mounted terminal.
[FIG. 2] FIG. 2 is an explanatory diagram showing an example of a process of changing a display position of an object performed by an information processing apparatus according to a first embodiment of the present disclosure.
[FIG. 3] FIG. 3 is a block diagram showing a functional configuration of the information processing apparatus according to the embodiment.
[FIG. 4] FIG. 4 is a flowchart showing a process of changing a display in accordance with movement of a neck of a user according to the embodiment.
[FIG. 5] FIG. 5 is an explanatory diagram illustrating a situation in which a display becomes an OFF state.
[FIG. 6] FIG. 6 is an explanatory diagram showing an example of an operation input for rendering changing of a display using movement of a neck of a user incapable.
[FIG. 7] FIG. 7 is an explanatory diagram showing another example of an operation input for rendering changing of a display using movement of a neck of a user incapable.
[FIG. 8] FIG. 8 is an explanatory diagram showing an example of an operation for changing display positions of objects in accordance with movement of a neck of a user and selecting an object.
[FIG. 9] FIG. 9 is an explanatory diagram showing an example of an operation input for cancelling a selected object.
[FIG. 10] FIG. 10 is an explanatory diagram showing an example that a cancel icon is displayed, the cancel icon being for cancelling a selected object.
[FIG. 11] FIG. 11 is an explanatory diagram illustrating a process of changing display positions of objects in the case where the number of objects displayed in a display area is large.
[FIG. 12] FIG. 12 is an explanatory diagram illustrating a process of changing display positions of objects in the case where the number of objects displayed in a display area is small.
[FIG. 13] FIG. 13 is an explanatory diagram showing a process of changing a display according to a second embodiment of the present disclosure, which shows an operation of displaying hidden objects in a display area.
[FIG. 14] FIG. 14 is an explanatory diagram showing a process of changing a display according to the embodiment, which shows a state in which a display state of objects displayed after scrolling is maintained for a predetermined time.
[FIG. 15] FIG. 15 is an explanatory diagram showing a process of changing a display according to the embodiment, which shows a state in which a display state of objects is returned to a normal state after a predetermined time elapses.
[FIG. 16] FIG. 16 is an explanatory diagram showing an example of a way of widening an interval between objects.
[FIG. 17] FIG. 17 is an explanatory diagram showing another example of a way of widening an interval between objects.
[FIG. 18] FIG. 18 is a hardware configuration diagram showing an example of a hardware configuration of a head mounted terminal.

### Description of Embodiment(s)

Hereinafter, (a) preferred embodiment(s) of the present disclosure will be described in detail with reference to the appended drawings. In this specification and the appended drawings, structural elements that have substantially the same function and structure are denoted with the same reference numerals, and repeated explanation of these structural elements is omitted.

Note that the description will be given in the following order.
1. First embodiment (widening interval between objects in accordance with movement of neck)
   1.1. Overview
   1.2. Functional configuration
   1.3. Process of changing display in accordance with movement of neck of user
2. Second embodiment (displaying hidden object in accordance with movement of neck)
3. Modified example
4. Hardware configuration example

### <1. First embodiment>

### [1.1. Overview]

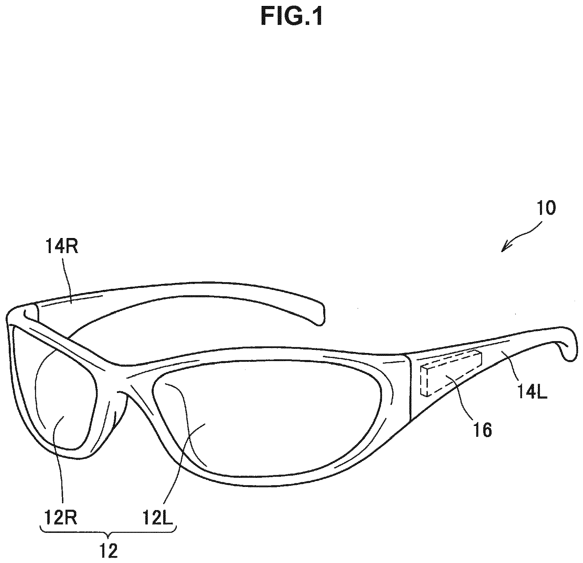

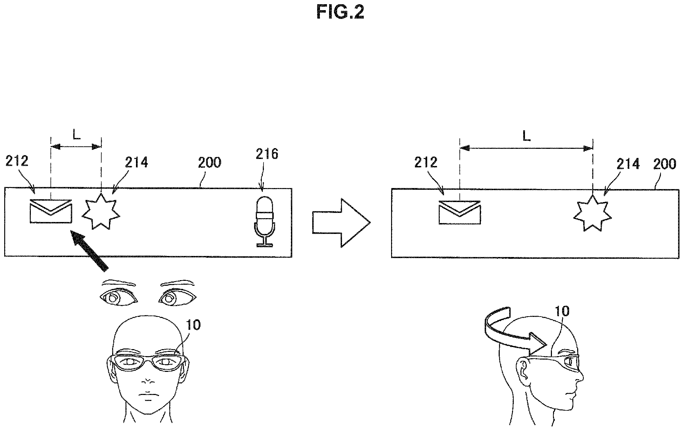

First, with reference to FIGS. 1 and 2, an overview of a process performed by an information processing apparatus according to a first embodiment of the present disclosure will be described. Note that FIG. 1 is an explanatory diagram showing an example of a head mounted terminal 10. FIG. 2 is an explanatory diagram showing an example of a process of changing a display position of an object performed by the information processing apparatus according to the present embodiment.

The head mounted terminal 10 used in the present embodiment is a device that is used by being worn on a head of a user. Example of the head mounted terminal 10 includes a glasses-type terminal as shown in FIG. 1. The head mounted terminal 10 shown in FIG. 1 includes a front part including a display 12 placed in front of the eyes of the user when worn, and support parts 14R and 14L provided on the right and left of the front part, respectively. The support parts 14R and 14L are placed at the sides of the head, and the front part is fixed to the nose. In this way, the head mounted terminal 10 can be worn.

The display 12 includes a display 12R for a right eye and a display 12L for a left eye. On the display 12, various types of information are displayed by a display unit (not shown) that projects video. The display 12 according to the present embodiment is an optically transmissive display panel, for example, and does not block a field of view of an external world. Therefore, the user can naturally see the external world and a view displayed on the display 12.

The head mounted terminal 10 according to the present embodiment includes, as a sensor for detecting movement of a neck of a user wearing the terminal, a gyro sensor 16 configured to detect angular velocity, for example. The gyro sensor 16 may be provided in the support part 14L, for example, or may be provided in another part of the terminal. When the user wearing the head mounted terminal 10 turns his/her neck, the angular velocity of the head mounted terminal 10 that turns along with the turning of the neck is detected by the gyro sensor 16. The angular velocity detected by the gyro sensor 16 is used as a value representing the movement of the turning of the neck of the user.

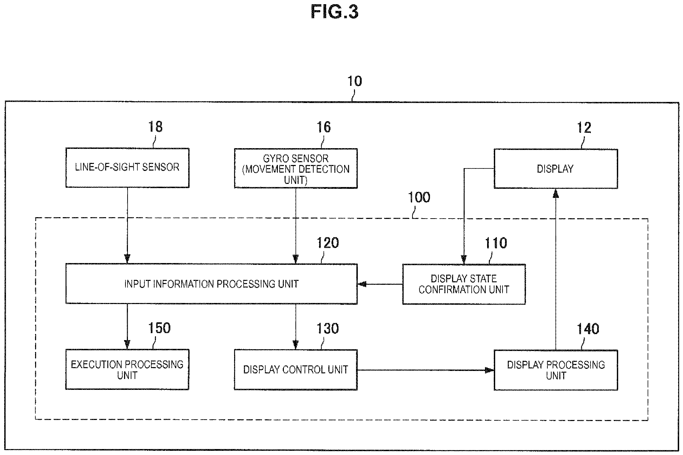

Further, the head mounted terminal 10 includes a line-of-sight sensor (reference numeral 18 shown in FIG. 3) configured to detect a line of sight of the user wearing the terminal. Examples of the line-of-sight sensor include a visible light camera and an infrared camera which image the eyes of the user. Analyzing an image acquired by the line-of-sight sensor, the line of sight of the user can be identified. With such a function, in the head mounted terminal 10 according to the present embodiment, the user can operate information displayed in the display area of the display 12 by moving the line of sight.

Note that the form of the head mounted terminal 10 is not limited to the form shown in FIG. 1. For example, the shape of the head mounted terminal 10 may be a goggle-type terminal, and the display may be provided to both eyes as shown in FIG. 1 or may be provided to one of the eyes correspondingly. Further, the display type is not limited to an optical transmission type, and may be a non-transmission type that blocks a field of view of an external world and a video transmission type that captures a scene of an external world and displays the scene on a display. In addition to the display 12, the display unit, and the gyro sensor 16, the head mounted terminal 10 may also include a touch sensor, a microphone, a speaker, and a GPS, for example.

Such a head mounted terminal 10 includes an information processing apparatus (reference numeral 100 shown in FIG. 3) for controlling various functions. The information processing apparatus performs, for example, processing of controlling a display unit configured to display information on the display 12 and causing an application to function on the basis of an operation of a user.

Here, the head mounted terminal 10 according to the present embodiment can perform an operation of the terminal using the line of sight. For example, as shown in the left side of FIG. 2, let us assume that a user wearing the head mounted terminal 10 is seeing a display area 200 of the display 12. For example, displayed in the display area 200 are objects such as a mail icon 212 for starting up a mailer, an application icon 214 for starting up an application, and a microphone icon 216. The user moves the line of sight, brings the line of sight to an object, and thus can select any object.

In such an operation using the line of sight, the operation can be performed in the range that the user can move the line of sight within the display area 200. However, it is burden on the eyes to direct the line of sight to an object at near an end of the display area 200, such as the mail icon 212. In general, the range that a person can naturally move his/her line of sight without moving his/her face is approximately 30° in the horizontal direction. Accordingly, if an angle of view of the display area 200 is increased to exceed 30°, the angle of view exceeds the range to which the user can naturally direct his/her line of sight. Therefore, it becomes difficult to select objects at both ends of the display area 200.

Further, the movement distance of the line of sight in the display area 200 is small with respect to the movement of the line of sight of a person, and hence, even though the user moves his/her line of sight, the line of sight in the display area 200 does not move as much as the user expects. For example, when the line of sight is moved 10° in the horizontal direction, the movement distance in the display area 200 is only about 30 to 40 pixels. Therefore, it is inconvenient to select an icon out of adjacent icons, such as the mail icon 212 and the application icon 214, with fine movement of the line of sight.

Accordingly, in the head mounted terminal 10 according to the present embodiment, a display position of an object displayed in the display area 200 is changed in accordance with the movement of the neck of the user, so that the operation using the line of sight can be performed easily. For example, as shown in the right side of FIG. 2, when the user turns his/her face left, the display positions are changed as follows. The mail icon 212 and the application icon 214, which are displayed adjacent to each other on the left side of the display area 200, are each moved to the right side, and an interval L between the mail icon 212 and the application icon 214 is widened. In this way, the objects are displayed within the range that the user can naturally move his/her line of sight, and, with the widening in the interval L between the adjacent objects, each object can be selected easily.

As described above, when the user moves his/her neck in the direction in which the object that the user wants to operate is present, the information processing apparatus moves the object in accordance with the movement such that the object can be easily selected using the line of sight. Hereinafter, there will be described in detail processes of changing a display position of an object in accordance with movement of a neck performed by the information processing apparatus.

### [1.2. Functional configuration]

FIG. 3 shows a functional configuration of the information processing apparatus 100 of the head mounted terminal 10 according to the present embodiment. Note that, although FIG. 3 shows functional units that are involved in a process of changing a display position of an object according to movement of a neck, the information processing apparatus 100 may include functional units other than those. An information processing system for changing a display position of an object in accordance with movement of a neck of a user includes the information processing apparatus 100 according to the present embodiment, the gyro sensor 16, and the line-of-sight sensor 18.

As shown in FIG. 3, the information processing apparatus 100 according to the present embodiment includes a display state confirmation unit 110, an input information processing unit 120, a display control unit 130, a display processing unit 140, and an execution processing unit 150.

The display state confirmation unit 110 is a functional unit configured to confirm an ON/OFF state of the display 12. The display state confirmation unit 110 outputs the ON/OFF state of the display 12 to the input information processing unit 120.

The input information processing unit 120 acquires input information from the user, on the basis of results detected by the gyro sensor 16 and the line-of-sight sensor 18 of the head mounted terminal 10 and information input from various input units of the head mounted terminal 10. For example, the input information processing unit 120 analyzes the movement of the neck of the user on the basis of the result detected by the gyro sensor 16, and identifies an input performed by the user. Further, for example, the input information processing unit 120 identifies an object that the user is seeing among the objects displayed in the display area 200 of the display 12 on the basis of the result detected by the line-of-sight sensor 18. In addition, the input information processing unit 120 identifies input information for switching the ON/OFF state of the display 12 on the basis of the ON/OFF state of the display 12 input by the display state confirmation unit 110 and the operations of the user performed by using various input units.

In this way, the input information processing unit 120 acquires the operation or the contents of action input by the user as the input information, on the basis of the results detected by the gyro sensor 16 and the line-of-sight sensor 18 and the information input from various input units of the head mounted terminal 10. The input information is output to the display control unit 130 and the execution processing unit 150.

The display control unit 130 changes a display position of an object displayed on the display 12 on the basis of the input information acquired by the input information processing unit 120. The display control unit 130 changes the display position of the object displayed on the display 12 in accordance with the movement of the neck of the user on the basis of the input information, such that the user can easily operate the object. Further, the display control unit 130 may display the object selected in accordance with the movement of the line of sight in a manner that the selected object is visually recognized. Note that the detail of the process performed by the display control unit 130 will be described later. The display control unit 130 outputs the display control information for changing the display of the display 12 to the display processing unit 140.

The display processing unit 140 performs various display processes to be displayed on the display 12 on the basis of the display control information. Display information such as an object to be displayed in the display area 200 is subjected to a display process by the display processing unit 140, and is then displayed on the display 12.

The execution processing unit 150 executes various processes on the basis of the input information acquired by the input information processing unit 120. When an object displayed on the display 12 is selected and is determined, for example, the execution processing unit 150 executes an application associated with the object.

Note that, although in the present embodiment a configuration has been shown in which the head mounted terminal 10 includes all of the gyro sensor 16, the line-of-sight sensor 18, and the information processing apparatus 100, which constitute an information processing system, the present disclosure is not limited to such an example. For example, only the gyro sensor 16 and the line-of-sight sensor 18 may be provided in the head mounted terminal 10, and the information processing apparatus 100 may be provided in a separate information processing terminal. Examples of the information processing terminal include a smartphone and a server. In this case, the results detected by the respective sensors are transmitted to the information processing terminal, and are subjected to the display control process by the information processing apparatus 100 of the information processing terminal. The information processing terminal transmits, to the head mounted terminal 10, display information to be displayed on the display 12 of the head mounted terminal 10 in accordance with the results obtained by the process.

### [1.3. Process of changing display in accordance with movement of neck of user]

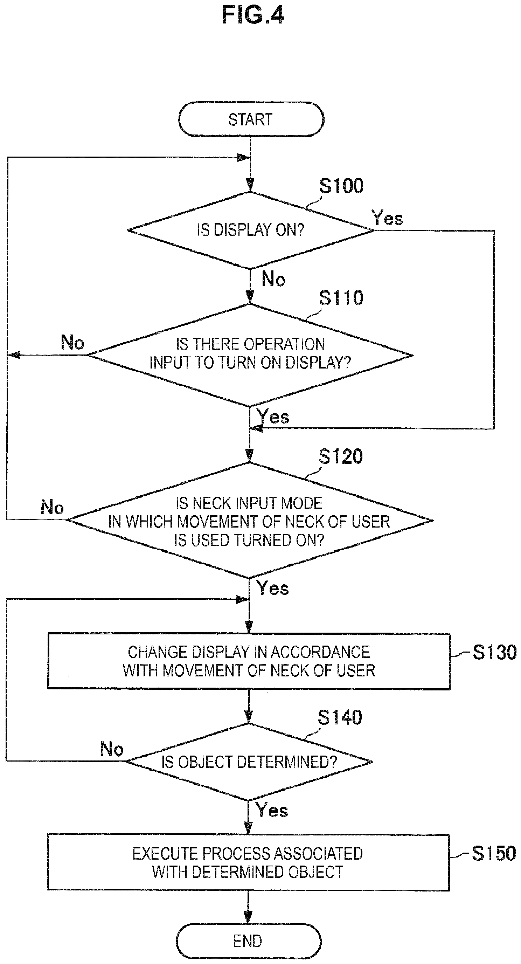

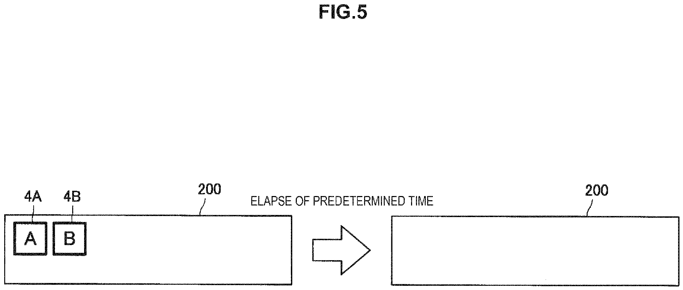

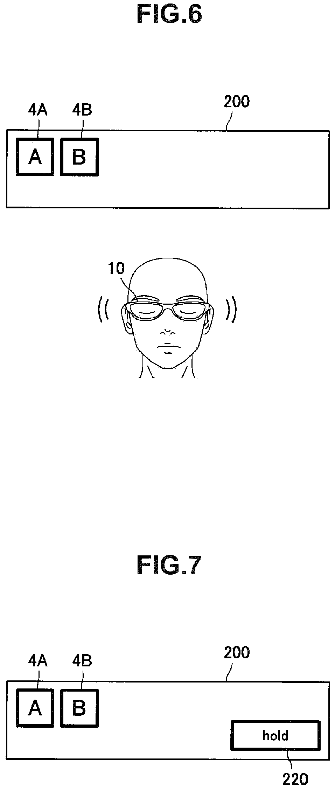

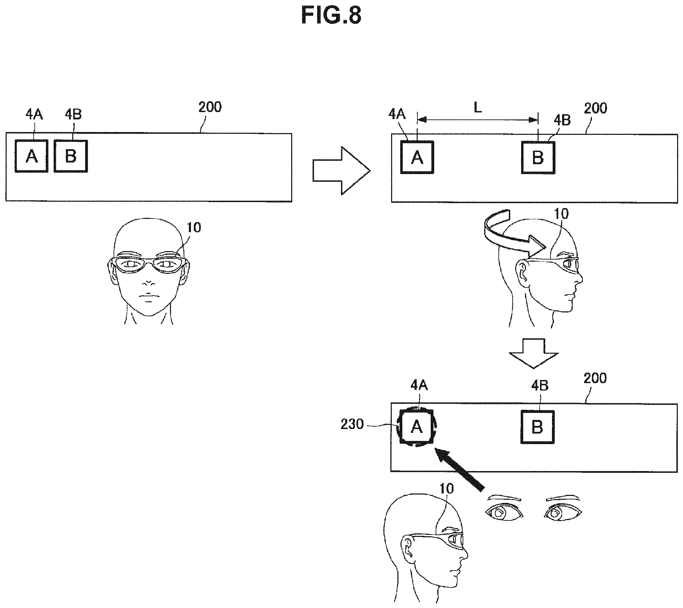

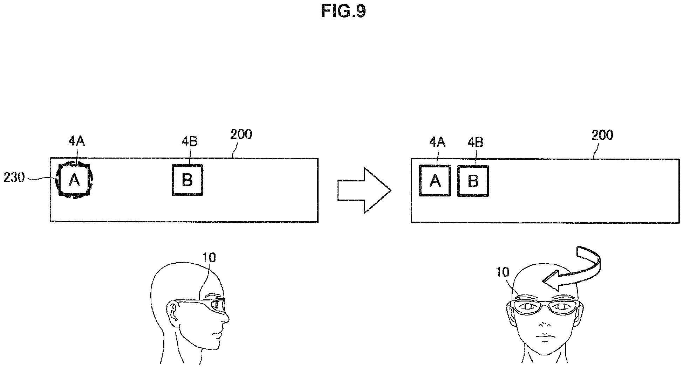

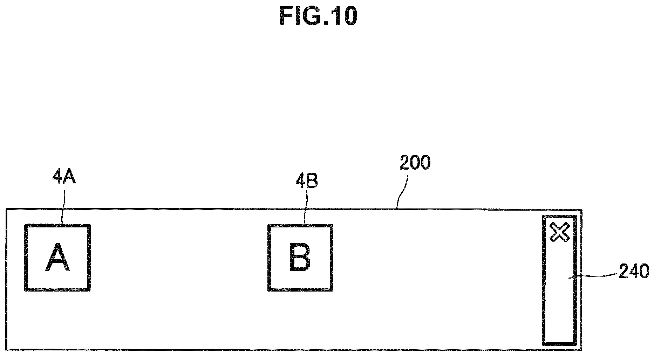

Next, with reference to FIGS. 4 to 10, a process of changing a display in accordance with movement of a neck of a user according to the present embodiment will be described. Note that FIG. 4 is a flowchart showing a process of changing a display in accordance with movement of a neck of a user according to the present embodiment. FIG. 5 is an explanatory diagram illustrating a situation in which the display 12 becomes an OFF state. FIG. 6 is an explanatory diagram showing an example of an operation input for rendering changing of a display using movement of a neck of a user incapable. FIG. 7 is an explanatory diagram showing another example of an operation input for rendering changing of a display using movement of a neck of a user incapable. FIG. 8 is an explanatory diagram showing an example of an operation for changing display positions of objects in accordance with movement of a neck of a user and selecting an object. FIG. 9 is an explanatory diagram showing an example of an operation input for cancelling a selected object. FIG. 10 is an explanatory diagram showing an example that a cancel icon is displayed, the cancel icon being for cancelling a selected object.

As described above, when an object displayed on the display 12 is selected using a line-of-sight input in the head mounted terminal 10, it is burden on the eyes to select an object displayed at an end of the display area 200. Accordingly, in the present embodiment, the burden in the case of selecting an object using the line-of-sight input is reduced by changing the display position of the object displayed on the display 12 in accordance with movement of a neck of a user.

First, regarding input, in the case where there is no input from the user to the head mounted terminal 10 for a predetermined time or more, the display 12 is generally turned off automatically for reducing power consumption. For example, as shown in the left side of FIG. 5, let us assume that two objects 4A and 4B are displayed in the display area 200. In this case, when there is no input from the user for a predetermined time or more, the display 12 is turned off as shown in the right side of FIG. 5, and the objects 4A and 4B are hidden. In the case where the display 12 is in the OFF state, nothing happens when the user turns his/her neck to the right and left. This is for avoiding executing any process by mistake caused by movement of the neck of the user while the user is talking with a person, for example.

In the process of changing a display according to the present embodiment, as shown in FIG. 4, first, it is confirmed whether the display 12 is in the ON state (S100). The ON/OFF state of the display 12 is confirmed by the display state confirmation unit 110, and a result obtained by the confirmation is output to the input information processing unit 120. In the case where the display 12 is in the ON state based on the confirmation result, the input information processing unit 120 proceeds to Step S120. On the other hand, in the case where the display 12 is in the OFF state, the input information processing unit 120 determines whether there is a user's operation input to turn on the display 12 (S110).

Examples of the operation input to turn on the display 12 include performing a predetermined operation through an input unit provided to the head mounted terminal 10, and performing a gesture of nodding by moving the neck up and down. The input information processing unit 120 determines in Step S110 presence/absence of the operation input to turn on the display 12, and repeats the process from Step S100 until the operation input is detected. Then, when the input information processing unit 120 detects the operation input to turn on the display 12, the input information processing unit 120 successively confirms whether a neck input mode in which a display position of an object is changed in accordance with movement of the neck of the user is in the ON state (S120).

There is the case where, although the display 12 is in the ON state, the user does not want to change the display position of the object using the movement of his/her neck. In such a case, the user can turn off the neck input mode. Example of the operation input to turn off the neck input mode may include, as shown in FIG. 6, an easy gesture of the neck such as the user lightly shaking his/her neck side to side. Alternatively, as shown in FIG. 7 for example, the operation input may be an operation of moving the line of sight to a hold button 220, which is displayed on the display area 200 and which is for turning off the neck input mode, to select and determine the hold button 220.

In the case where it is determined in Step S120 that the neck input mode is in the OFF state, the process returns to Step S100 and is repeated. On the other hand, in the case where the neck input mode is in the ON state, the display control unit 130 changes the display position of the object displayed in the display area 200 of the display 12 in accordance with the movement of the neck of the user, on the basis of a result detected by the gyro sensor 16 configured to detect the movement of the neck of the user (S130).

For example, as shown in the upper left of FIG. 8, let us assume a case where an object group including two objects 4A and 4B is displayed near an end of the display area 200 as a normal state and the user selects the object 4A. In the normal state, the user faces front, and the direction of the front face represents a reference position. At this time, the user turns his/her face in a direction (the left side in FIG. 8) in which an object that the user wants to select is displayed. As shown in the upper right of FIG. 8, with this movement of the neck, for only the object group displayed in the direction to which the neck is turned, the display positions of the objects 4A and 4B are changed such that an interval L between the objects 4A and 4B becomes larger than the interval in the normal state.

The interval L between the objects 4A and 4B may be widened to an extent that an object selected by the user's line of sight is not falsely recognized. For example, the interval L may be set to approximately 40 pixels. Note that, since the interval L changes depending on variations between individual users or on system configurations, the false detection of the line-of-sight input can be avoided more reliably by, for example, detecting a degree of saccadic eye movement at the time of activating the head mounted terminal 10, and by setting the interval L in accordance with the movement of the user's line of sight.

With increase in the interval L between the objects 4A and 4B, it becomes easier to direct the line of sight to each of the objects 4A and 4B, and an object can be selected more robustly using the line-of-sight input. Further, by turning the neck side to side, objects can be placed within the range that the user can naturally move his/her line of sight, regardless of the size of the display area 200.

Further, in widening the interval L between the objects 4A and 4B using the movement of the neck of the user, only the display position of the object 4B, which is placed at the opposite side to the direction of the turning of the neck among the object group, may be changed, but the object 4A may also be moved toward the center of the display area. In this way, objects are moved and displayed from the range to which it is difficult for the user to naturally direct his/her line of sight to the range that the user can naturally move his/her line of sight, and thus, the objects can be selected more easily.

The user turns his/her neck side to side to change the display positions of the objects 4A and 4B displayed in the display area 200, and selects a desired objects using the line of sight. For example, as shown in the lower right of FIG. 8, by directing the line of sight to the object 4A, the object 4A is in the selected state. In this case, in order that the object selected by the user is easily recognized, a selection object 230 showing that the object is in a state of being selected may be displayed.

Then, the input information processing unit 120 determines whether an operation input for determining the object is performed in the state in which the object is being selected (S140). Examples of operation inputs for determining the object include keep watching the selected object for a predetermined time, performing a predetermined operation through an input unit of the head mounted terminal 10, and performing a gesture of nodding by moving the neck up and down.

While the operation input for determining the object is not performed in Step S140, the process returns to Step S130 and is repeated. That is, the display position of the object displayed in the display area 200 is changed in accordance with the movement of the neck of the user. In this case, the selected object may be cancelled by the movement of the neck or the user's line of sight. For example, as shown in the left side of FIG. 9, the user turns his/her neck to the left, and, from the state in which the object 4A is selected, the user faces front as shown in the right side of FIG. 9. In this way, the display positions of the objects 4A and 4B in the display area 200 may be returned to the normal state, and the selection of the object 4A may be cancelled.

Alternatively, as shown in FIG. 10, a cancel object 240 for returning the display of the object to the normal state may be provided at the opposite side to the direction in which the user has turned his/her neck. With selection and determination of the cancel object 240 using the user's line of sight, the display of the object is back to the normal state. When the object display on the display 12 is in the normal state, the process of Step S130 is executed after it is detected that the user has faced front.

When it is detected in Step S140 that an operation input for determining the object is performed, the execution processing unit 150 executes a process associated with the determined object (S150).

Heretofore, the process of changing the display position of the object in accordance with the movement of the neck of the user according to the present embodiment has been described. As in the present embodiment, when the user turns his/her neck, the display positions of the objects are changed such that the interval between the objects is widened. Accordingly, since the objects are moved to positions that the user can easily move his/her line of sight, it becomes easier for the user to select an object using his/her line of sight.

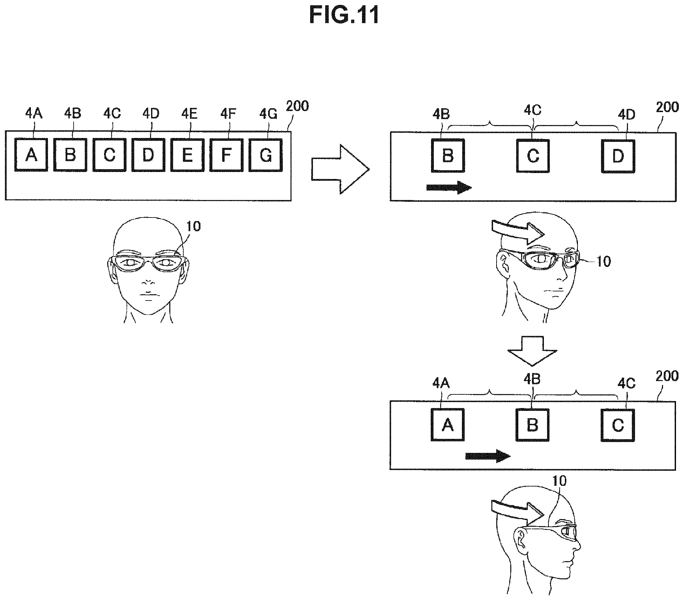

Note that, in the description above, although the case in which the objects 4A and 4B are displayed near the left end of the display area 200 as shown in FIG. 8 has been described, the display positions of objects in the normal state are not limited to the above example. For example, as shown in FIG. 11, there may be a case in which multiple objects 4A to 4G are arranged closely to each other in the width direction of the display area 200. Also in such a case, in the same manner as described above, an interval between objects that are placed in the direction in which the user turns his/her neck is widened, so that it becomes easier for the user to select an object.

To be specific, when the number of objects 4A to 4G arranged in the display area 200 is large, for example, the intervals between objects that are placed in the direction in which the user turns his/her neck are widened, and in addition, the objects to be displayed in the display area 200 may be changed in accordance with a turning angle of the neck. For example, in the normal state shown in the upper left of FIG. 11, which is the display state when the user faces front, the user slightly turns his/her neck to the left (approximately 15°, for example), and only the objects 4B to 4D, which have been placed from the center to the left side in the normal state, are displayed as shown in the upper right of FIG. 11. In this case, the objects 4B to 4D are displayed at regular intervals, the intervals being wider than the intervals in the normal state.

Then, when the user further turns his/her neck to the left, as shown in the lower right of FIG. 11, the objects 4A to 4C, which have been displayed near the left end in the normal state, are displayed at regular intervals, the intervals being wider than the intervals in the normal state. In this way, in displaying objects with widened intervals in accordance with the turning of the neck of the user, the objects to be displayed are changed in accordance with the turning angle of the neck, and thus, the intervals of the objects which makes it easier for the user to select an object using his/her line of sight can be maintained.

In general, the range that a person can naturally turn his/her neck is approximately 70° to the left and to the right. Therefore, for example, the object at the right end may be displayed when the neck is turned 70° to the right, the object at the left end may be displayed when the neck is turned 70° to the left, and, every time the neck is turned a predetermined degrees, the objects to be displayed in the display area 200 may be changed. In this way, the user can display desired objects in a state that the objects can be selected easily with comfortable movement of the neck.

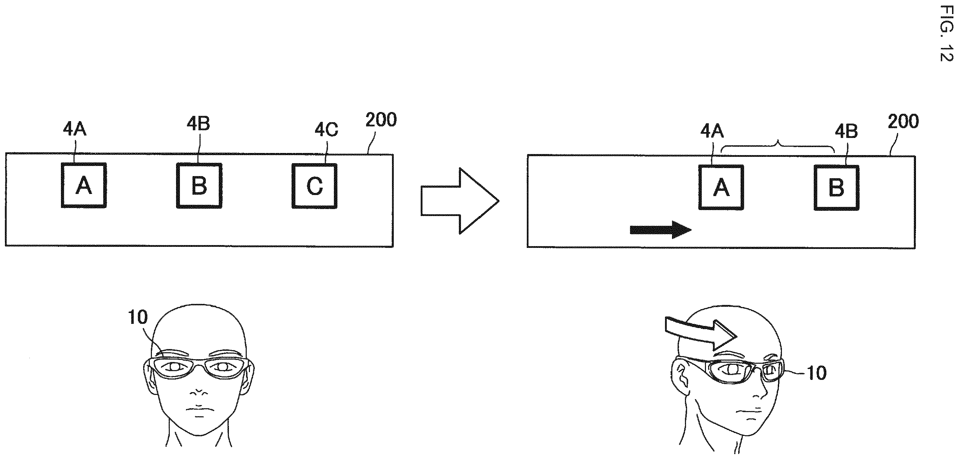

On the other hand, as shown in FIG. 12, there is a case in which the number of objects 4A to 4C displayed in the display area 200 is small. In the example shown in FIG. 12, intervals between adjacent objects are sufficient, which is different from the example shown in FIG. 8. In this case, in order that the user can select an object even more easily, the objects may be moved to the opposite side to the turning of the neck in the same manner as in the case of FIG. 11, and may be displayed near the center so that the user can easily perform operation using the line of sight.

Further, an interval between adjacent objects may be widened with the degree to which the user turns his/her neck, that is, with increase in the turning angle of the neck. With increase in the interval between the objects, the possibility that an adjacent object is selected by mistake is decreased, and hence, the false operation can be prevented. Such a process is particularly effective in the case where the number of objects is small.

### <2. Second embodiment>

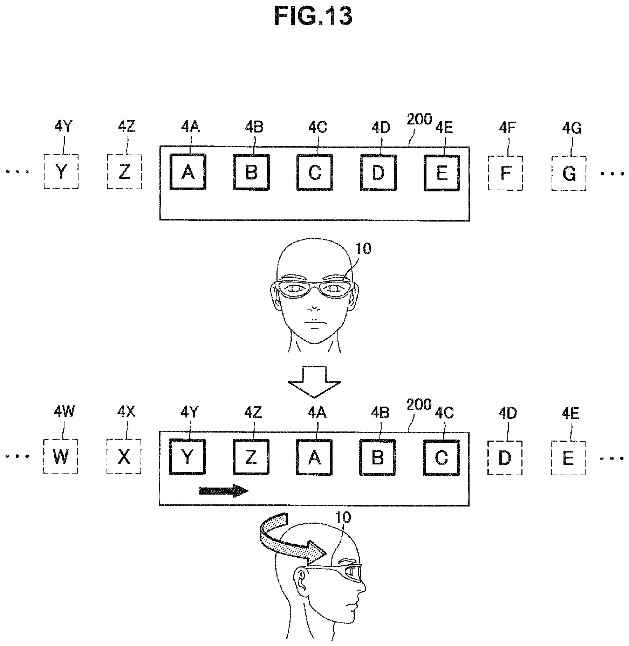

Next, with reference to FIGS. 13 to 15, there will be described processes of changing display positions of objects in accordance with movement of a neck of a user according to a second embodiment of the present disclosure. In the present embodiment, description will be made on processes of the cases where some objects out of objects 4A to 4Z which are capable of being displayed on the display 12 are arranged in the display area 200. Also in the present embodiment, display positions of objects are changed such that the intervals between the objects are increased in accordance with the movement of the neck of the user, however, there is also a case where an object that the user wants to select is hidden. Accordingly, the process of widening the intervals between the objects may be performed after the desired object is displayed in the display area 200 using the movement of the neck of the user.

For example, as shown in the upper side of FIG. 13, let us assume that in the normal state in which the user faces front, objects 4A to 4E are displayed in the display area 200 and objects 4F to 4Z are hidden. In this case, when the user turns his/her neck to the left at predetermined angular velocity or more, the objects 4A to 4E displayed in the display area 200 move to the right side. Then, as shown in the lower side of FIG. 13, the objects displayed at the left end of the display area 200 in the normal state are displayed near the center of the display area 200, the objects 4Y and 4Z which have been hidden are displayed, and the objects 4D and 4E are hidden.

In this way, the user moves his/her neck at the predetermined angular velocity or more, and thereby is capable of scrolling objects and displaying hidden objects. The user performs such an action to display a desired object in the display area 200. After that, the user selects the desired object using the line of sight. However, as described in the first embodiment, it is difficult to direct the line of sight to an object displayed near an end of the display area 200. Accordingly, by applying the process according to the first embodiment and widening the interval between the objects using the movement of the neck of the user, the user can easily operate the object placed at the end using his/her line of sight.

Here, the action of the neck for widening the interval between the objects is easier to be performed if it is started from the state in which the user faces front. After the user scrolls the objects by moving his/her neck at the predetermined angular velocity or more, the display may be kept unchanged for a predetermined time even if the user turns his/her neck at angular velocity smaller than the predetermined angular velocity.

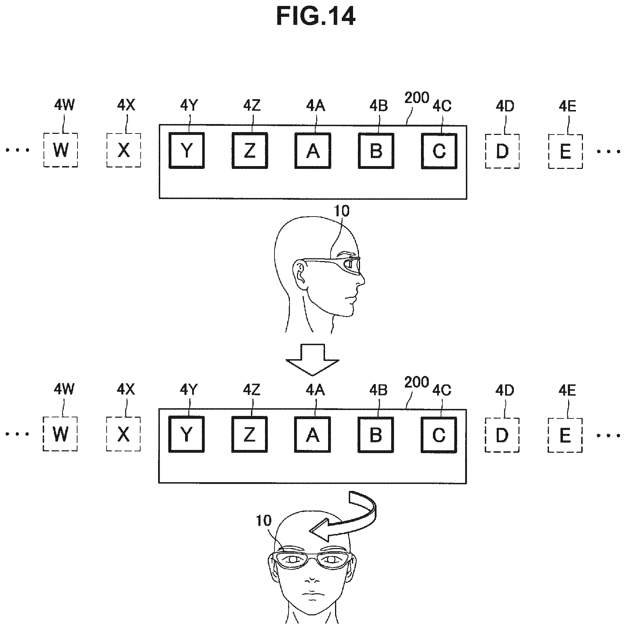

For example, as shown in the upper side of FIG. 14, let us assume that the user turns his/her neck to the left at the predetermined angular velocity or more, and the objects 4Y to 4C are displayed in the display area 200. After that, if the user turns his/her neck to face front at angular velocity smaller than the predetermined angular velocity within the predetermined time, the state in which the objects 4Y to 4C are displayed in the display area 200 is maintained as shown in the lower side of FIG. 14. In this way, in selecting a desired object out of the objects 4Y to 4C, it becomes easier for the user to perform the action of his/her neck for widening the interval between the objects.

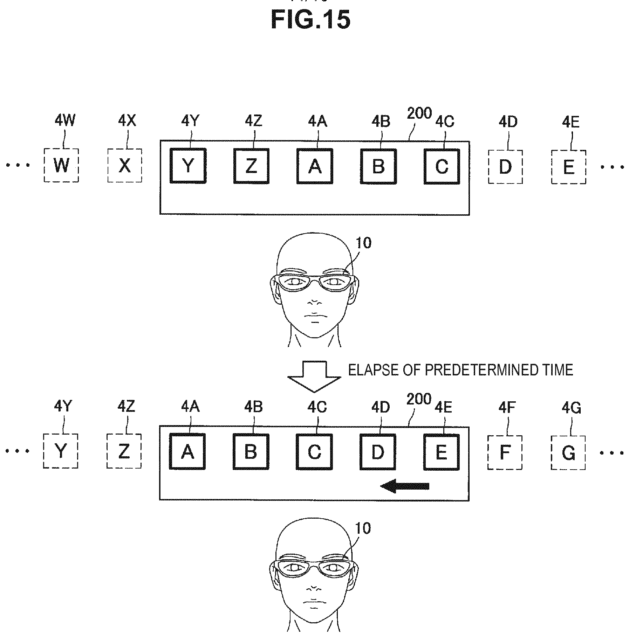

Note that, in the case where, after the user has moved his/her neck at the predetermined angular velocity or more to scroll the objects and then has turned his/her neck to face front within the predetermined time, the action of turning his/her neck is not performed for a predetermined time or more, the objects displayed on the display area 200 may be returned to the state before the scrolling, as shown in FIG. 15.

Heretofore, the processes of changing display positions of objects in accordance with the movement of the neck of the user according to the second embodiment have been described. According to the present embodiment, in the case where there are objects which are not displayed in the display area 200, objects can be scrolled by turning the neck at predetermined angular velocity or more. In addition, by turning the neck at angular velocity smaller than the predetermined angular velocity in the state in which a desired object is displayed in the display area 200, the interval between the objects displayed in the turning direction can be widened. In this way, the objects can be displayed in the state in which the objects are easily selected.

### <3. Modified example>

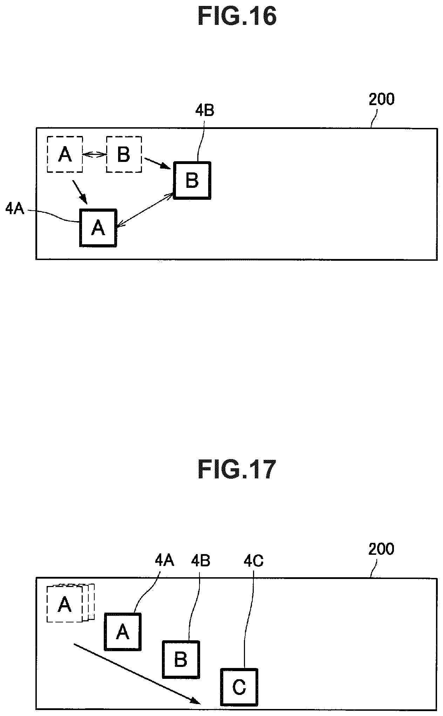

In the embodiments described above, in widening the interval between the objects in accordance with the movement of the neck of the user, the display positions of the objects are changed such that the interval in the width direction (horizontal direction) in the display region is widened, however, the present technology is not limited to such an example. For example, as shown in FIG. 16, let us assume that in the normal state in which the user faces front, objects 4A and 4B adjacent to each other are displayed at the left end of the display area 200. In this state, when the user turns his/her neck to the left side, the objects 4A and 4B may be moved in the horizontal direction and in the vertical direction such that the interval therebetween is widened.

Alternatively, as shown in FIG. 17, let us assume that in the normal state in which the user faces front, objects 4A to 4C are displayed in a stacked manner at the left end of the display area 200. In this state, when the user turns his/her neck to the left side, the objects 4A to 4C may be moved so as to spread out in the horizontal direction and in the vertical direction such that the interval therebetween is widened.

In this way, the display positions of the objects changed in accordance with the movement of the neck of the user may be changed only in the horizontal direction, or may be changed in the horizontal direction and in the vertical direction. Further, the movement of the neck of the user may be, in addition to the side-to-side movement (that is, horizontal direction), the up-and-down movement.

### <4. Hardware configuration example>

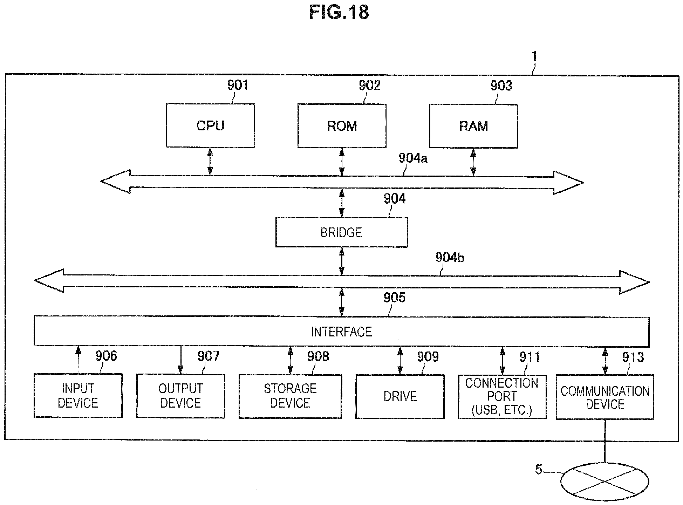

The head mounted terminal 10 according to the present embodiment may also be configured as shown in FIG. 18, for example. Hereinafter, with reference to FIG. 18, a hardware configuration example of the head mounted terminal 10 according to the present embodiment will be described.

The head mounted terminal 10 according to the present embodiment can be realized by, as described above, a processing device such as a computer. As shown in FIG. 18, the head mounted terminal 10 includes a central processing unit (CPU) 901, read only memory (ROM) 902, random access memory (RAM) 903, and a host bus 904a. Further, the head mounted terminal 10 includes a bridge 904, an external bus 904b, an interface 905, an input device 906, an output device 907, a storage device 908, a drive 909, a connection port 911, and a communication device 913.

The CPU 901 functions as an arithmetic processing unit and a control unit, and controls entire operation of the head mounted terminal 10 in accordance with various programs. Further, the CPU 901 may be a microprocessor. The ROM 902 stores a program, a calculation parameter, and the like used by the CPU 901. The RAM 903 temporarily stores a program used in execution of the CPU 901, a parameter varying as appropriate during the execution, and the like. They are connected with each other via the host bus 904a configured from a CPU bus or the like.

The host bus 904a is connected to the external bus 904b such as a peripheral component interconnect/interface (PCI) bus via the bridge 904. Note that it is not necessary that the host bus 904a, the bridge 904, and the external bus 904b be configured separately, and the functions thereof may be implemented in one bus.

The input device 906 is configured from, for example, input means for inputting information by a user, such as a mouse, a keyboard, a touch panel, a button, a microphone, a switch, and a lever, and an input control circuit which generates an input signal based on the input by the user and outputs the generated input signal to the CPU 901. The output device 907 includes, for example, display devices such as a liquid crystal display (LCD) device, an organic light emitting diode (OLED) device, and a lamp, and an audio output device such as a speaker.

The storage device 908 is an example of a storage section of the head mounted terminal 10, and is a device for storing data. The storage device 908 may include, for example, a storage medium, a recording device for recording data in the storage medium, a reading device for reading out the data from the storage medium, and a deletion device for deleting the data recorded in the storage medium. The storage device 908 drives a hard disk and stores a program executed by the CPU 901 and various data.

The drive 909 is a reader/writer for the storage medium and is built in or externally attached to the head mounted terminal 10. The drive 909 reads out information recorded in a removable recording medium which is mounted thereto, such as a magnetic disk, an optical disc, a magneto-optical disk, or semiconductor memory, and outputs the information to the RAM 903.

The connection port 911 is an interface connected to an external device, and is a connection port with an external device capable of transmitting data by a universal serial bus (USB), for example. Further, the communication device 913 is a communication interface which is configured from, for example, a communication device for establishing a connection with a communication network 5. In addition, the communication device 913 may be a wireless local area network (LAN) enabled communication device, a wireless USB enabled communication device, or a wired communication device for performing wired communication.

The preferred embodiment(s) of the present disclosure has/have been described above with reference to the accompanying drawings, whilst the present disclosure is not limited to the above examples. A person skilled in the art may find various alterations and modifications within the scope of the appended claims, and it should be understood that they will naturally come under the technical scope of the present disclosure.

For example, although the gyro sensor 16 is used as a sensor for detecting the movement of the neck of the user in the embodiments described above, the present technology is not limited to such an example. For example, the head mounted terminal 10 may include a camera that captures a scene of outside, and, by acquiring a movement distance of a characteristic point included in an image captured by the camera through image processing, the movement and the angular velocity of the neck of the user may be determined.

Further, the effects described in this specification are merely illustrative or exemplified effects, and are not limitative. That is, with or in the place of the above effects, the technology according to the present disclosure may achieve other effects that are clear to those skilled in the art based on the description of this specification.

### Reference Signs List

- 10: head mounted terminal
- 12: display
- 16: gyro sensor
- 18: line-of-sight sensor
- 100: information processing apparatus
- 110: display state confirmation unit
- 120: input information processing unit
- 130: display control unit
- 140: display processing unit
- 150: execution processing unit
- 200: display area

## Claims

1. An information processing system comprising:
a device (10) worn by a user and comprising:
a line-of-sight detection unit (18) configured to detect a line of sight of the user;
a movement detection unit (16) configured to detect movement of the device (10); and
a display (12); and
an information processing apparatus (100) comprising a display control unit (130) configured to display, in a display area (200) of the display (12), a plurality of objects (212, 214, 216) that are selectable using the detected line of sight, and further configured to move at least one object of the plurality of objects (212, 214, 216) in accordance with the movement of the device (10);
**characterised in that** the display control unit (130) is configured to move the at least one object (212, 214, 216) to widen an interval (L) between adjacent objects (212, 214, 216).

2. The information processing system according to claim 1, wherein the display control unit (130) is configured to move the at least one object (212, 214, 216) in a direction different from a direction in which the device (10) has moved.

3. The information processing system according to claim 1, wherein the movement detection unit (16) is configured to detect a turning angle of the device (10) measured from a reference position.

4. The information processing system according to claim 1, wherein the movement detection unit (16) is configured to detect angular velocity of the device (10).

5. The information processing system according to claim 4, wherein, when the angular velocity of the device (10) is greater than or equal to a predetermined velocity, the display control unit (130) is configured to scroll the at least one object (212, 214, 216) in a direction different from a direction in which the device (10) has moved.

6. The information processing system according to claim 1, wherein the device (10) is a head mounted display device, and
the movement detection unit (16) is configured to detect movement of the device (10) caused by movement of the neck of the user wearing the head mounted display device.

7. An information processing method comprising:
detecting, by a movement detection unit (16) of a device (10) worn by a user, movement of the device (10);
displaying, in a display area (200) of a display (12) of the device (10), a plurality of objects (212, 214, 216) that are selectable using a line of sight detected by a line-of-sight detection unit (18) of the device; and
moving at least one object of the plurality of objects (212, 214, 216) in accordance with the movement of the device (10);
**characterised in that** the at least one object (212, 214, 216) is moved to widen an interval (L) between adjacent objects (212, 214, 216).

## Patentansprüche

1. Informationsverarbeitungssystem, das Folgendes umfasst:
eine Vorrichtung (10), getragen durch einen Benutzer und Folgendes umfassend:
eine Sichtliniendetektionseinheit (18), ausgelegt zum Detektieren einer Sichtlinie des Benutzers;
eine Bewegungsdetektionseinheit (16), ausgelegt zum Detektieren von Bewegung der Vorrichtung (10); und
eine Anzeige (12); und
eine Informationsverarbeitungsvorrichtung (100), umfassend eine Anzeigesteuereinheit (130), ausgelegt zum Anzeigen, in einem Anzeigebereich (200) der Anzeige (12), von mehreren Objekten (212, 214, 216), die auswählbar sind unter Verwendung der detektierten Sichtlinie, und ferner ausgelegt zum Bewegen von zumindest einem Objekt der mehreren Objekte (212, 214, 216) in Übereinstimmung mit der Bewegung der Vorrichtung (10);
**dadurch gekennzeichnet, dass**
die Anzeigesteuereinheit (130) ausgelegt ist zum Bewegen des zumindest einen Objekts (212, 214, 216) zum Weiten eines Abstands (L) zwischen aneinander angrenzenden Objekten (212, 214, 216).

2. Informationsverarbeitungssystem nach Anspruch 1, wobei die Anzeigesteuereinheit (130) ausgelegt ist zum Bewegen des zumindest einen Objekts (212, 214, 216) in eine Richtung verschieden von einer Richtung, in die sich die Vorrichtung (10) bewegt hat.

3. Informationsverarbeitungssystem nach Anspruch 1, wobei die Bewegungsdetektionseinheit (16) ausgelegt ist zum Detektieren eines Drehwinkels der Vorrichtung (10), gemessen von einer Bezugsposition.

4. Informationsverarbeitungssystem nach Anspruch 1, wobei die Bewegungsdetektionseinheit (16) ausgelegt ist zum Detektieren einer Winkelgeschwindigkeit der Vorrichtung (10).

5. Informationsverarbeitungssystem nach Anspruch 4, wobei, wenn die Winkelgeschwindigkeit der Vorrichtung (10) größer als oder gleich einer vorbestimmten Geschwindigkeit ist, die Anzeigesteuereinheit (130) ausgelegt ist zum Abrollen des zumindest einen Objekts (212, 214, 216) in eine Richtung verschieden von einer Richtung, in die sich die Vorrichtung (10) bewegt hat.

6. Informationsverarbeitungssystem nach Anspruch 1, wobei die Vorrichtung (10) eine kopfmontierte Anzeigevorrichtung ist und die Bewegungsdetektionseinheit (16) ausgelegt ist zum Detektieren von Bewegung der Vorrichtung (10), verursacht durch Bewegung des Halses des Benutzers, der die kopfmontierte Anzeigevorrichtung trägt.

7. Informationsverarbeitungsverfahren, das Folgendes umfasst:
Detektieren, durch eine Bewegungsdetektionseinheit (16) einer durch einen Benutzer getragenen Vorrichtung (10), von Bewegung der Vorrichtung (10);
Anzeigen, in einem Anzeigebereich (200) einer Anzeige (12) der Vorrichtung (10), von mehreren Objekten (212, 214, 216), die auswählbar sind unter Verwendung einer Sichtlinie, detektiert durch eine Sichtliniendetektionseinheit (18) der Vorrichtung; und Bewegen von zumindest einem Objekt der mehreren Objekte (212, 214, 216) in Übereinstimmung mit der Bewegung der Vorrichtung (10);
**dadurch gekennzeichnet, dass**
das zumindest eine Objekt (212, 214, 216) bewegt wird, um einen Abstand (L) zwischen aneinander angrenzenden Objekten (212, 214, 216) zu weiten.

## Revendications

1. Système de traitement d'informations comprenant :
un dispositif (10) porté par un utilisateur et comprenant :
une unité de détection de ligne de visée (18) configurée pour détecter une ligne de visée de l'utilisateur ;
une unité de détection de mouvement (16) configurée pour détecter un mouvement du dispositif (10) ; et
un écran (12) ; et
un appareil de traitement d'informations (100) comprenant une unité de commande d'affichage (130) configurée pour afficher, dans une zone d'affichage (200) de l'écran (12), une pluralité d'objets (212, 214, 216) qui sont sélectionnables au moyen de la ligne de visée détectée, et également configurée pour déplacer au moins un objet de la pluralité d'objets (212, 214, 216) en fonction du mouvement du dispositif (10) ;
**caractérisé en ce que**
l'unité de commande d'affichage (130) est configurée pour déplacer l'au moins un objet (212, 214, 216) pour élargir l'intervalle (L) entre objets adjacents (212, 214, 216).

2. Système de traitement d'informations selon la revendication 1,
dans lequel l'unité de commande d'affichage (130) est configurée pour déplacer l'au moins un objet (212, 214, 216) dans une direction différente d'une direction dans laquelle le dispositif (10) a bougé.

3. Système de traitement d'informations selon la revendication 1,
dans lequel l'unité de détection de mouvement (16) est configurée pour détecter un angle de rotation du dispositif (10) mesuré à partir d'une position de référence.

4. Système de traitement d'informations selon la revendication 1,
dans lequel l'unité de détection de mouvement (16) est configurée pour détecter une vitesse angulaire du dispositif (10).

5. Système de traitement d'informations selon la revendication 4,
dans lequel, quand la vitesse angulaire du dispositif (10) est supérieure ou égale à une vitesse prédéterminée, l'unité de commande d'affichage (130) est configurée pour faire défiler l'au moins un objet (212, 214, 216) dans une direction différente d'une direction dans laquelle le dispositif (10) a bougé.

6. Système de traitement d'informations selon la revendication 1,
dans lequel le dispositif (10) est un dispositif d'affichage monté sur la tête, et
l'unité de détection de mouvement (16) est configurée pour détecter un mouvement du dispositif (10) provoqué par un mouvement du cou de l'utilisateur portant le dispositif d'affichage monté sur la tête.

7. Procédé de traitement d'informations comprenant :
la détection, par une unité de détection de mouvement (16) d'un dispositif (10) porté par un utilisateur, d'un mouvement du dispositif (10) ;
l'affichage, dans une zone d'affichage (200) d'un écran (12) du dispositif (10), d'une pluralité d'objets (212, 214, 216) qui sont sélectionnables au moyen d'une ligne de visée détectée par une unité de détection de ligne de visée (18) du dispositif ; et
le déplacement d'au moins un objet de la pluralité d'objets (212, 214, 216) en fonction du mouvement du dispositif (10) ;
**caractérisé en ce que**
l'au moins un objet (212, 214, 216) est déplacé pour élargir un intervalle (L) entre objets adjacents (212, 214, 216).
